# EUROPÄISCHE PATENTSCHRIFT

(11) **EP 4 421 437 B1**
(45) Veröffentlichungstag und Bekanntmachung des Hinweises auf die Patenterteilung: **29.01.2025**
(21) Anmeldenummer: 23158875.7
(22) Anmeldetag: 27.02.2023
(51) Int. Cl.: F28F 9/02, H01M 10/6555

(54) **WÄRMEÜBERTRAGERPLATTE UND VERFAHREN ZUR HERSTELLUNG EINER WÄRMEÜBERTRAGERPLATTE**
HEAT EXCHANGER PLATE AND METHOD FOR PRODUCING A HEAT EXCHANGER PLATE
PLAQUE D'ÉCHANGEUR DE CHALEUR ET PROCÉDÉ DE FABRICATION D'UNE PLAQUE D'ÉCHANGEUR DE CHALEUR

(43) Veröffentlichungstag der Anmeldung: 28.08.2024
(73) Patentinhaber: Benteler Automobiltechnik GmbH, 33102 Paderborn (DE)
(72) Erfinder: Düpmeier, Tobias, 33100 Paderborn (DE); Fortmeier, Günter, 33129 Delbrück (DE); Grußmann, Elmar, 33184 Altenbeken (DE); Bickmann, Carsten, 33165 Lichtenau (DE)
(74) Vertreter: Ksoll, Peter

(56) Entgegenhaltungen:
- EP-A1- 3 741 876
- CA-A1- 2 520 238
- DE-B4- 102010 051 106
- US-B2- 8 418 517

## Beschreibung

Die Erfindung betrifft eine Wärmeübertragerplatte sowie ein Verfahren zur Herstellung von Wärmeübertragerplatten. Insbesondere, betrifft die vorliegende Erfindung eine Wärmeübertragerplatte nach dem Oberbegriff des Anspruchs 1. Solch eine Platte ist aus DE 10 2010 051106 bekannt.

Wärmeübertragerplatten kommen für unterschiedlichste Anwendungen zum Einsatz. Bei einer Wärmeübertragerplatte der vorliegend in Rede stehenden Art handelt es sich insbesondere um eine Kühlplatte zur Batteriekühlung von Kraftfahrzeugen.

Die gesteigerten Anforderungen an Elektrofahrzeuge bezüglich Reichweite, Fahrleistung und Ladezeit haben zur Folge, dass die thermischen Belastungen der Batterien durch Überhitzung bzw. Alterung zunehmen. Um diese schädlichen Effekte zu reduzieren, wird mittels von Medien durchflossenen Temperierelementen die Betriebstemperatur einer Batterie begrenzt. Bei den Temperierelementen handelt es sich um Wärmeübertragerplatten in Form von Kühlplatten, die oberhalb, seitlich und/oder unterhalb eines Batteriemoduls angeordnet werden.

Wärmeübertragerplatten herkömmlicher Bauart bestehen üblicherweise aus gefügten Aluminiumblechen oder stranggepressten Aluminiumprofilen, die über Anschlussstutzen das Durchströmen der Wärmeübertragerplatten mit Temperiermedium bzw. Kühlfluid ermöglichen. Meist werden die Anschlussstutzen formgebend oder spanabhebend gefertigt und mit dem Plattenkörper einer Kühlplatte verbunden. Die Anschlussstutzen sind so konzipiert, dass sie eine schnelle Montage von Kühlfluidleitungen ermöglichen.

Durch die EP 2 372 761 B1 zählt eine Kühlplatte mit einem aus zwei Plattenelementen gebildeten Plattenkörper zum Stand der Technik, bei der Fluidanschlüsse bzw. Anschlussstutzen für Kühlfluid an einer ebenen Fläche eines Plattenelements parallel zur Fläche des Plattenelements angeordnet sind.

Bei der aus der EP 2 607 832 A1 bekannten Kühlplatte erfolgt die Zuleitung und Ableitung von Kühlfluid über Verbinderstücke, die mit einem Anschlussabschnitt in eine Aufnahme am Plattenelement einsteckbar sind.

Auch bei der in der EP 3 741 876 A1 beschriebenen Batteriekühlplatte ist der Plattenkörper aus zwei Plattenelementen gebildet und weist Anschlussstutzen für Kühlfluid auf, wobei ein Anschlussstutzen parallel zur Ebene der Plattenelemente ausgerichtet und mit einem Anschlussabschnitt in einem Aufnahmeabschnitt des Plattenkörpers gefügt ist.

Die DE 10 2010 051 106 B4 offenbart eine Kühlplatte, die mindestens einen Kühlkanal zur Leitung eines Kühlmittels aufweist, der mit zumindest einem Einlass und zumindest einem Auslass versehen ist. Die Kühlplatte weist zumindest zwei flächig aneinander anliegenden Plattenelemente auf, in denen Ausbuchtungen ausgeformt sind, die miteinander einen Kühlkanal ausbilden. Der Einlass und der Auslass sind jeweils mit einem Anschlussstutzen versehen zur Verbindung des Kühlkanals mit einer Kühlmittelanschlusseinheit.

Der Erfindung liegt ausgehend vom Stand der Technik die Aufgabe zugrunde, eine funktional und herstellungstechnisch verbesserte Wärmeübertragerplatte zu schaffen sowie ein Verfahren zur Herstellung einer Wärmeübertragerplatte aufzuzeigen, welches eine montagegerechte, prozesssichere und günstige Fügung eines Anschlussstutzens an dem Plattenkörper einer Wärmeübertragerplatte gewährleistet.

Die Lösung des gegenständlichen Teils der Aufgabe besteht in einer Wärmeübertragerplatte gemäß den Merkmalen von Anspruch 1.

Der verfahrensmäßige Teil der Aufgabe wird durch ein Verfahren nach Anspruch 11 gelöst.

Vorteilhafte Ausgestaltungen und Weiterbildungen der Erfindung sind Gegenstand der anhängigen Ansprüche.

Eine Wärmeübertragerplatte weist einen aus zwei Plattenelementen gebildeten Plattenkörper und Anschlussstutzen für die Zuleitung und Ableitung eines Kühlfluids auf. Bei den Plattenelementen handelt es sich insbesondere um eine Kanalplatte und eine Bodenplatte, welche zu einem Plattenstapel zusammengeführt und miteinander gefügt den Plattenkörper bilden. Mit dem Plattenkörper sind die Anschlussstutzen gefügt. Zumindest ein Anschlussstutzen besitzt einen Anschlussabschnitt, der in einem, zwischen den Plattenelementen ausgebildeten Aufnahmeabschnitt des Plattenkörpers gefügt ist. Die Ausrichtung des Anschlussabschnitts des Anschlussstutzens ist parallel zur Ebene der Plattenelemente. Außerhalb des Plattenkörpers kann der Anschlussstutzen Bogen- und/oder Krümmungsabschnitte aufweisen. Der außerhalb des Plattenkörpers verlaufende Teil des Anschlussstutzens ist als Koppelabschnitt zum Anschluss einer Anschlussleitung für ein Kühlfluid konfiguriert.

Die Plattenelemente bestehen aus Leichtmetall oder einer Leichtmetalllegierung, insbesondere einer Aluminiumlegierung.

Zumindest ein Plattenelement des Plattenkörpers der Kühlplatte weist eine Kanalstruktur zur Durchleitung eines Kühlfluids auf.

Erfindungsgemäß weist der Anschlussabschnitt zwei nach außen gerichtete Längsstege und der Aufnahmeabschnitt weist sich im Bereich der Fügeebene zwischen den Plattenelementen erstreckende Längskehlen auf, wobei die Längsstege in den Längskehlen verlaufen.

Die Plattenelemente sind unter Eingliederung des Anschlussabschnitts des Anschlussstutzens im Aufnahmeabschnitt des Plattenkörpers löttechnisch gefügt. Die Längsstege und die Längskehlen ergänzen einander komplementär. Die Kontur bzw. Konfiguration der Längsstege und der Längskehlen stellt einen technologisch notwendigen Fügespalt sicher. Die Fügeflächen sind optimiert. Der Fügespalt, insbesondere die Breite des Fügespalts, ist über den Umfang bzw. den Verlauf zwischen Anschlussabschnitt und Aufnahmeabschnitt vergleichmäßigt ohne Dickensprünge. Die Spaltbreite ist klein. Eine hochfeste, dichte, stoffschlüssige Fügung des Anschlussstutzens mit seinem Anschlussabschnitt im Aufnahmeabschnitt des Plattenkörpers wird erreicht.

Der Anschlussabschnitt weist zwei konvex gekrümmte Wandabschnitte auf, die sich zwischen den Längsstegen erstrecken. Insbesondere sind die Wandabschnitte elliptisch bzw. ellipsenabschnittsförmig gekrümmt.

Die beiden gekrümmten Wandabschnitte verlaufen spiegelsymmetrisch zu einer Querachse des Anschlussabschnitts, insbesondere der Mittellängsachse, und gehen jeweils endseitig in einen Längssteg über. Die Wandabschnitte sind konvex gekrümmt zum Mittelpunkt bzw. der Mittellängsachse des Anschlussabschnitts. In den Stegabschnitten sind die Seitenflächen konkav gekrümmt.

Eine Ausgestaltung des Anschlussabschnitts sieht vor, dass der Anschlussabschnitt des Anschlussstutzens im Querschnitt eine elliptische bzw. ellipsenförmige Außenkontur auf mit auf einer Querachse einander gegenüberliegenden nach außen gerichteten Längsstegen.

Möglich ist es, dass der Anschlussabschnitt im Querschnitt abgeflachte obere und untere Wandabschnitte, insbesondere Mittelwandabschnitte, besitzt, welche jeweils endseitig über konvex gekrümmte Wandabschnitte in einen Längssteg übergeben.

Der Aufnahmeabschnitt des Plattenkörpers bildet einen Einsteck- bzw. Fügebereich für den Anschlussabschnitt des Anschlussstutzens.

Der Anschlussstutzen weist im Anschlussabschnitt beidseitig sich in Längsrichtung des Anschlussstutzens erstreckende Längsstege auf. Diese sind im Querschnitt dreieckförmig konfiguriert mit konkaven Stegwänden und einer gerundeten Spitze. Die Kontur der Längsstege gewährleistet einen fließenden Übergang von der elliptischen Außenkontur zu den Längsstegen mit gerundeten Außenflächen ohne Stufen oder scharfe Krümmungen bzw. Abwinkelungen.

Die Längskehlen des Aufnahmeabschnitts sind im Querschnitt trichterförmig konfiguriert mit bezogen auf den Mittelpunkt bzw. die Mittellängsachse des Anschlussstutzens und des Aufnahmeabschnitts konkaven Kehlwangen und einem keilförmigen Kehlgrund. Die Innenkontur im Bereich der durch die Kehlwangen gebildeten Innenecke des Aufnahmeabschnitts ist entlang der Kehlwangen gerundet. Der Kehlgrund am Übergang des Aufnahmeabschnitts zu den einander kontaktierenden Plattenelementen ist spitzwinklig.

Die Konfiguration der Längsstege und der Längskehlen sind zueinander komplementär ausgebildet. Die Konturen von Längssteg und Längskehle ergänzen einander derart, dass die Längsstege in die Längskehlen nach Art einer Nut/Feder-Verbindung zusammenwirken, wobei zwischen den Konturen ein Fügespalt ausgebildet ist.

Der Anschlussabschnitt weist zwei konvex gekrümmt verlaufende Wandabschnitte auf. Diese erstrecken sich jeweils zwischen den einander gegenüberliegenden Längsstegen und gehen in die konkaven Stegwände über.

Der Aufnahmeabschnitt weist konvex gekrümmt verlaufende Innenwandabschnitte auf, an welche sich die konkaven Kehlwangen anschließen.

Die Angaben "konvex" und "konkav" beziehen sich jeweils auf den Mittelpunkt bzw. die Längsachse des Anschlussstutzens. Eine konvexe Fläche, eine konvexe Wand oder ein konvexer Wandabschnitt ist eine vom Mittelpunkt bzw. der Mittellängsachse des Anschlussstutzens nach außen gewölbte Fläche bzw. Abschnitt.

Eine konkave Fläche, ein konkaver Wandabschnitt oder eine konkave Kehlwange ist ein oder eine in Bezug auf den Mittelpunkt bzw. die Mittellängsachse des Anschlussabschnitts nach innen gewölbte oder gekrümmt verlaufende Fläche, Abschnitt oder Wange.

Im Querschnitt sind der Anschlussabschnitt des Anschlussstutzens ebenso wie der Aufnahmeabschnitt spiegelsymmetrisch zur horizontalen Mittelquerachse und zur vertikalen Mittelquerachse ausgestaltet.

Die Querschnittskontur des Anschlussabschnitts kann als Zitronenform bzw. zitronenförmig beschrieben werden, wobei die Querschnittsangabe auf einen Längsschnitt durch eine Zitrone bezogen ist. Das bedeutet, der Anschlussabschnitt ist ellipsenförmig konfiguriert und weist im Querschnitt eine Hauptachse sowie eine Nebenachse auf. Die Hauptachse und die Nebenachse stehen senkrecht aufeinander und schneiden sich im Mittelpunkt entlang der Mittelachse des Anschlussstutzens. Die Hauptachse beschreibt die größte Abmessung des Anschlussstutzens im Anschlussabschnitt, wohingegen die Nebenachse die kleinste Abmessung des Anschlussabschnitts in radialer Richtung nach außen beschreibt. Bezogen auf die Fügeebene der Plattenelemente des Plattenkörpers erstreckt sich die Hauptachse in der Fügeebene und entspricht der horizontalen Mittelquerachse. Die Nebenachse entspricht der vertikalen Mittelquerachse.

Der Querschnitt des Anschlussstutzens im Anschlussabschnitt ist symmetrisch bezüglich der Hauptachse und der Nebenachse.

Die Längsstege liegen auf der Hauptachse einander gegenüber und sind nach außen aus der Wand des Anschlussstutzens geformt.

Wie erläutert, sind die Längsstege im Querschnitt insbesondere dreieckförmig ausgeformt mit gerundeten, konkaven Stegwänden und einer gerundeten Spitze. Die gerundete Spitze bildet die Kuppe eines Seitenstegs.

Zwischen dem Anschlussabschnitt des Anschlussstutzens und dem Aufnahmeabschnitt des Plattenkörpers ist ein Fügespalt ausgebildet. Durch die konturnahe Ausformung der Stutzengeometrie des Anschlussstutzens und des Aufnahmeabschnitts und deren Abstimmung aufeinander, ist ein technologisch notwendiger und vorteilhafter Fügespalt sichergestellt. Besonders vorteilhaft ist, dass der Fügespalt im Querschnitt in seinem Umfangsverlauf eine geringe bzw. kleine Breite hat, die auf dem überwiegenden Teil der Umfangslänge des Fügespalts gleichmäßig klein ist. Auch im Bereich zwischen den Spitzen der Längsstege und dem keilförmigen Kehlgrund einer Längskehle ist der Lötspalt klein.

Zwischen Anschlussabschnitt und Aufnahmeabschnitt ist ein Lotwerkstoff appliziert. Die Plattenelemente untereinander sowie die Plattenelemente und der Anschlussstutzen sind löttechnisch gefügt. Dies ist herstellungstechnisch und prozesssicher sowie kostengünstig zu realisieren. Die löttechnische Fügung der Bauteile erfolgt in einem Formlötwerkzeug, in welchem die Plattenelemente an den Fügeflächen aneinander gepresst, der Aufnahmeabschnitt des aus den beiden Plattenelementen gebildeten Plattenkörpers endgeformt, der Kanal im Plattenkörper ausgebildet wird und die Bauteile auf Löttemperatur erwärmt und löttechnisch miteinander gefügt werden.

Im Formwerkzeug erfolgt ein kombiniertes Formen und Löten. Im Formlötwerkzeug wird der Kanal und die Kanalstruktur im Plattenkörper geformt, der Anschlussabschnitt des Plattenkörpers endgeformt sowie die Plattenelemente untereinander und die Plattenelemente bzw. der Aufnahmeabschnitt und der Fügeabschnitt des Anschlussstutzens miteinander verlötet. Beim Lötvorgang sind die Bauteile im Formlötwerkzeug eingespannt und aneinander gepresst.

Ein Aspekt der Erfindung nutzt die Umformeigenschaften des duktilen Lotwerkstoffs zur Abdichtung des Anschlussstutzens im Aufnahmeabschnitt. Der Anschlussabschnitt des Anschlussstutzens wird zumindest endkonturnah vorgeformt. Hierbei erhält der Anschlussabschnitt seine Querschnittskonfiguration mit zwei auf einer Querachse nach außen gerichteten Längsstegen und den bogenförmig gekrümmt verlaufenden Wandabschnitten, die sich zwischen den Längsstegen erstrecken. Die Formgebung des Anschlussstutzens erfolgt umformtechnisch unter Nutzung eines Innendorns.

Auf den Anschlussabschnitt des Anschlussstutzens ist ein Lotwerkstoff appliziert. Der Lotwerkstoff im Bereich zwischen Anschlussabschnitt und Aufnahmeabschnitt kann vorappliziert auf die beiden Formabschnitte der Plattenelemente bzw. den Anschlusskonturen sein. Eine vorteilhafte Ausgestaltung und Vorgehensweise sieht vor, dass ein Lotwerkstoff in den Anschlusskonturen oder auf dem Anschlussabschnitt appliziert wird, beispielsweise in Form von Lotwerkstofflagen oder Lotwerkstoffhülsen. Wie bereits erwähnt, kann hierfür Lotwerkstoff in geeigneter Menge auf den Formabschnitten und den Anschlusskonturen der Plattenelemente vorappliziert sein. Der Lotwerkstoff wird beispielsweise in Form eines Lotstreifens oder einer Lothülse aus einem niedrigschmelzenden Lotwerkstoff, insbesondere einem Lotwerkstoff auf Aluminiumbasis, auf dem Anschlussabschnitt aufgebracht sein bzw. werden.

Die Plattenelemente werden in ein beheizbares Formlötwerkzeug überführt, welches ein Oberwerkzeug und ein Unterwerkzeug besitzen. Hierzu kann außerhalb des Formlötwerkzeugs ein Plattenstapel aus den beiden Plattenelementen gebildet werden, wobei der Anschlussstutzen mit seinem Anschlussabschnitt bereits zwischen die Formabschnitte der Plattenelemente in den Anschlusskonturen positioniert werden kann. Dieser Plattenstapel wird dann in das Formlötwerkzeug überführt.

Ein Plattenstapel mit eingegliedertem Anschlussstutzen kann auch im Formlötwerkzeug gebildet werden. Hierzu werden die Plattenelemente unter Eingliederung des Anschlussstutzens im Formlötwerkzeug positioniert. Im Formlötwerkzeug ist der Anschlussabschnitt zwischen Formabschnitten der Plattenelemente und den dort vorgesehenen Anschlusskonturen positioniert. Die Formabschnitte können an vom Grundkörper der Plattenelemente vorstehenden Platinenabschnitten der Plattenelemente ausgebildet sein.

Beim Schließen des Formlötwerkzeugs wird der aus den beiden Plattenelementen gebildete Plattenstapel mit dem eingegliederten Anschlussabschnitt des Anschlussstutzens im Formlötwerkzeug eingeklemmt. Hierbei werden die Anschlusskonturen in den Formabschnitten der Plattenelemente um den Anschlussabschnitt des Anschlussstutzens endgeformt. Die Formabschnitte der Plattenelemente werden endgeformt und bilden den Aufnahmeabschnitt. Die Außenkontur des Anschlussabschnitts gibt die Innenkontur des Aufnahmeabschnitts vor. Die umgeformten Formabschnitte ergänzen sich zum Aufnahmeabschnitt. Der Aufnahmeabschnitt weist konvex gekrümmt verlaufende Innenwandabschnitte auf. Im Bereich der Fügeebene zwischen den Plattenelementen werden sich in Längsrichtung des Aufnahmeabschnitts erstreckende Längskehlen gebildet. Die Längskehlen sind im Querschnitt trichterförmig konfiguriert und weisen konkave Kehlwangen und einen keilförmigen Kehlgrund auf. Die Kehlwangen schließen sich an die gekrümmt verlaufenden Innenwandabschnitte des Aufnahmeabschnitts an.

Beim Formvorgang und der Ausbildung der Kontur des Aufnahmeabschnitts im Formlötwerkzeug wird der um den Anschlussstutzen applizierte Lotwerkstoff radial gestaucht und so verpresst, dass der duktile Lotwerkstoff in den sich bildenden Fügespalt zwischen Anschlussabschnitt und Aufnahmeabschnitt fließt.

Im Formlötwerkzeug eingespannt wird ein Zwischenraum zwischen den Plattenelementen des Plattenstapels mit Innendruck beaufschlagt. Dies erfolgt durch Einleiten eines Wirkmediums über den Anschlussstutzen. Durch innendrucktechnische Umformung wird zumindest ein Kanal in zumindest einem Plattenelement ausgebildet.

In Folge der Erwärmung der Plattenelemente bzw. des im Formlötwerkzeug eingespannten Plattenstapels wird der Lotwerkstoff zwischen den Plattenelementen und zwischen dem Anschlussabschnitt und dem Aufnahmeabschnitt aufgeschmolzen und die Bauteile stoffschlüssig gefügt.

Eine vorteilhafte Ausgestaltung sieht vor, dass der Anschlussstutzen einen Anschlag aufweist. Insbesondere ist ein Anschlag in Form einer Ringwulst ausgeführt. Der Anschlag bzw. die Ringwulst liegt stirnseitig am Anschlussstutzen an. Durch den Anschlag der stirnseitig am Anschlussstutzen zur Anlage gelangt, wird die Position des Anschlussstutzens in axialer Einführrichtung relativ zum Plattenkörper bestimmt. Weiterhin erfolgt eine axiale Abdichtung durch den Anschlag bzw. die Ringwulst an der Öffnung des Anschlussstutzens.

Eine weitere vorteilhafte Ausführungsform der erfindungsgemäßen Wärmeübertragerplatte sieht vor, dass ein Lotstoppmittel vorgesehen ist, welches den Lotfluss bei der Herstellung der Lötverbindung begrenzt. Das Lotstoppmittel ist zwischen dem Anschlussstutzen und dem Aufnahmeabschnitt angeordnet, insbesondere ist das Lotstoppmittel zwischen dem Anschlussabschnitt des Anschlussstutzens und dem Aufnahmeabschnitt angeordnet.

Eine Ausführungsform sieht vor, dass öffnungsseitig des Aufnahmeabschnitts ein Lotstoppmittel angeordnet ist. Öffnungsseitig bedeutet, dass das Lotstoppmittel im Bereich der Öffnung des Aufnahmeabschnitts innen im Aufnahmeabschnitt oder außen stirnseitig um die Öffnung des Aufnahmeabschnitts herum appliziert ist.

Eine für die Praxis besonders vorteilhafte Ausgestaltung sieht vor, dass das Lotstoppmittel durch eine Querschnittsveränderung im Anschlussabschnitt des Anschlussstutzens und im Aufnahmeabschnitt ausgestaltet ist. Das Lotstoppmittel ist durch die Querschnittsveränderung im Fügebereich zwischen dem, in den Formabschnitten der Plattenelemente ausgebildeten Aufnahmeabschnitt und dem Anschlussstutzen ausgebildet. Sowohl der Anschlussabschnitt als auch der Aufnahmeabschnitt weisen zwei Längenabschnitte mit voneinander verschiedenen Querschnitten auf. Die Längenabschnitte des Anschlussabschnitts, ebenso wie die Längenabschnittes des Aufnahmeabschnitts gehen über einen Verjüngungsabschnitt ineinander über.

Die Querschnittsveränderung im Anschlussabschnitt und im Aufnahmeabschnitt ergänzen einander und es kommt zu einer Querschnittsverringerung des Ringraums zwischen Anschlussabschnitt und Aufnahmeabschnitt. Der beim Lötvorgang schmelzflüssige Lotwerkstoff wird in der Querschnittsveränderung zwischen Anschlussabschnitt und Aufnahmeabschnitt aufgehalten. Hierdurch wird der Lotfluss bei der Herstellung der Lötverbindung begrenzt.

Eine optional zusätzliche oder alternative Ausführungsform sieht vor, dass das Lotstoppmittel aus einem Dichtmetall gebildet ist. Das Dichtmetall wird unter der Temperatureinwirkung im Formlötwerkzeug weich und dickflüssig. Es entsteht eine fließfähige, homogene Dichtmasse, die unter dem Druck im Formlötwerkzeug ein Fließen des geschmolzenen Lötwerkstoffs in unerwünschte bzw. technologisch nachteilige Bereiche verhindert. Das Dichtmetall weist eine höhere Schmelztemperatur auf als der für den Formlötvorgang eingesetzte Lotwerkstoff.

Das Lotstoppmittel ist dafür eingerichtet und bestimmt, den Lotfluss bei der Herstellung der Lötverbindung zu begrenzen. Auch ist das Lotstoppmittel dafür eingerichtet und bestimmt sowie positioniert, dass ein Ausblasen des während der Innendruckumformung der Plattenelemente zur Ausbildung des Kanals noch schmelzflüssigen Lotwerkstoffs zu verhindern.

Ein Lotstoppmittel kann auch aus einem Lotwerkstoff gebildet sein. Es werden folglich zwei Lotwerkstoffe mit unterschiedlichen Werkstoffeigenschaften appliziert. Ein Lotwerkstoff erster Art ist der Lotwerkstoff, der auf bzw. um den Anschlussabschnitt des Anschlussstutzens appliziert ist. Ein Lotwerkstoff zweiter Art weist eine gegenüber dem Lotwerkstoff erster Art höhere Schmelztemperatur auf und bildet das Lotstoppmittel. Der Lotwerkstoff zweiter Art schmilzt beim Erwärmen des Anschlussstutzens und des Aufnahmeabschnitts im Warmformwerkzeug später und ist unter der Temperatureinwirkung des Warmformwerkzeugs zäher als der Lotwerkstoff erster Art und damit dickflüssiger bzw. höher viskos. Auf diese Weise bildet der Lotwerkstoff zweiter Art ein Lotstoppmittel für den Lotwerkstoff erster Art.

Das Lotstoppmittel kann auch anders realisiert sein, beispielsweise in Form einer mechanischen Lotstoppsperre, insbesondere eines Lotstopprings. Auch die äußere Ringwulst, die stirnseitig am Aufnahmeabschnitt anliegt, kann die Öffnung lotwerkstoffabdichtend verschließen.

Es können auch zwei verschiedene Lotstoppmittel bzw. Arten von Lotstoppmitteln in Kombination eingesetzt werden. So kann ein Lotstoppmittel in Form einer Querschnittsveränderung im Anschlussabschnitt des Anschlussstutzens und einer komplementär dazu gestalteten Querschnittsveränderung im Aufnahmeabschnitt vorgesehen sein. Weiterhin kann ein Lotstoppmittel vorgesehen sein in Form einer mechanischen Lotstoppsperre, insbesondere einem separaten Ringkörper aus einem Lotstoppwerkstoff oder einem im Anschlussstutzen materialeinheitlich einstückig ausgebildeten Lotstoppring.

Der Anschlussstutzen weist den Anschlussabschnitt auf, über den die Fügung im Aufnahmeabschnitt des Plattenkörpers erfolgt. Einlaufseitig weist der Anschlussstutzen einen Koppelabschnitt auf. Der Koppelabschnitt dient zum Anschluss einer Kühlfluidleitung. Im Koppelabschnitt besitzt der Anschlussstutzen einen kreisrunden Querschnitt. Vom kreisrunden Querschnitt im Koppelabschnitt geht der Anschlussstutzen über einen Übergangsabschnitt in den Anschlussabschnitt über.

Eine die praktische Ausgestaltung weiter verbessernde Ausführungsform sieht vor, dass der Anschlussstutzen einen Koppelabschnitt aufweist mit einem Widerlager. Das Widerlager fungiert zum Anschluss einer Anschlussleitung für ein Kühlfluid. Der Widerlagerkörper ist bevorzugt in Form einer Ringwulst im hinteren Koppelabschnitt ausgebildet. Die Ringwulst ist werkstoffeinheitlich einstückiger Bestandteil des Koppelabschnitts.

Dem Anschlussabschnitt vor- und/oder nachgelagert kann ein Stutzenabschnitt vorgesehen sein, mit einem anderen Querschnitt als der vom Anschlussabschnitt, beispielsweise mit einem runden oder elliptischen Querschnitt ohne Längsstege.

Eine für die Praxis vorteilhafte Ausführungsform sieht vor, dass der Anschlussabschnitt des Anschlussstutzens zwei Längenabschnitte aufweist, wobei die beiden Längenabschnitte einen voneinander verschiedenen Querschnitt besitzen. Ein erster bzw. vorderer plattenkörperseitiger Längenabschnitt besitzt eine größere Querschnittsfläche als ein zweiter bzw. hinterer Längenabschnitt des Anschlussabschnitts. Der vordere bzw. erster Längenabschnitt besitzt die Querschnittskonfiguration mit seitlichen Längsstegen. Der erste Längenabschnitt und der zweite Längenabschnitt sind über einen Übergangs- bzw. einem Verbindungsabschnitt miteinander verbunden.

Komplementär zur Ausgestaltung der Längenabschnitte des Anschlussabschnitts ist der Aufnahmeabschnitt gestaltet. Auch der Aufnahmeabschnitt weist einen vorderen plattenkörperseitigen Längenabschnitt auf. Dieser weist eine andere Querschnittskonfiguration auf als ein sich über einen Übergang anschließender zweiter hinterer Längenabschnitt des Aufnahmeabschnitts. Die Querschnittsfläche des vorderen ersten Längenabschnitts des Aufnahmeabschnitts ist größer als die Querschnittsfläche des hinteren zweiten Längenabschnitts des Aufnahmeabschnitts.

Die Erfindung schafft eine vorteilhafte und schnelle, montagegerechte prozesssichere Verbindung zwischen einem bzw. mehreren Anschlussstutzen und dem Plattenkörper einer Wärmeübertragerplatte, insbesondere einer Kühlplatte. Eine hohe Prozessstabilität ist gewährleistet. Die Verbindung ist effizient und weist die bauteilgerecht geforderte Dichtheit auf.

Die Anschlussabschnitte des Anschlussstutzen sind parallel zu den Plattenelementen in der Fügeebene der Plattenelemente orientiert. Dies trägt durch einen parallelen Kühlfluideintritt bzw. Kühlfluidaustritt zu einer Reduzierung der Strömungswiderstände bei. Durch die parallele Ausrichtung der Anschlussstutzen zur Flächenebene der Plattenelemente und des Plattenkörpers erfolgt eine laminare Strömung des Kühlfluids ohne schroffe Umlenkung, Verwirbelungen oder Turbulenzen.

Weiterhin vorteilhaft ist, dass die erfindungsgemäße Ausgestaltung des Anschlussstutzens und des Aufnahmeabschnitts eine größere Anbindungsfläche des Anschlussstutzens zur Wärmeübertragerplatte realisiert. Hierdurch wird insgesamt eine Steigerung der Robustheit erzielt und Spannungsspitzen werden verringert.

Schließlich trägt die erfindungsgemäße Wärmeübertragerplatte und deren Herstellung auch zu einer Reduzierung der Schrottrate bei, da nachgeschaltete Fügeoperationen entfallen, zumindest jedoch reduziert werden.

Ein Verfahren zur Herstellung einer Wärmeübertragerplatte mit einem Anschlussstutzen weist folgende Schritte auf:
- Bereitstellen eines Anschlussstutzens, welcher einen Anschlussabschnitt mit zwei nach außen gerichteten Längsstegen aufweist;
- Bereitstellen eines ersten Plattenelements und eines zweiten Plattenelements, wobei das erste Plattenelement und das zweite Plattenelement eine Aufnahmekontur für den Anschlussabschnitt aufweisen;
- Überführen des ersten Plattenelements und des zweiten Plattenelements in ein beheiztes Formlötwerkzeug, welches ein Unterwerkzeug und ein Oberwerkzeug aufweist, wobei der Anschlussabschnitt des Anschlussstutzens zwischen Formabschnitten der Plattenelemente positioniert wird und zwischen dem Anschlussabschnitt und den Plattenelementen ein Lotwerkstoff angeordnet ist;
- Schließen des Formlötwerkzeugs und Einklemmen des Plattenstapels zwischen dem Unterwerkzeug und dem Oberwerkzeug, wobei die die Aufnahmekonturen in den Formabschnitten der Plattenelemente um den Anschlussabschnitt des Anschlussstutzens endgeformt werden und ein Aufnahmeabschnitt mit sich im Bereich der Fügeebene zwischen den Plattenelementen erstreckenden Längskehlen gebildet wird;
- Aufheizen des Plattenstapels;
- Beaufschlagung eines Zwischenraums zwischen den Plattenelementen des Plattenstapels mit Innendruck durch Einleiten eines Wirkmediums über den Anschlussstutzen in den Zwischenraum und Ausbilden eines Kanals in zumindest einem Plattenelement;
- Schmelzen des Lotwerkstoffs zwischen den Plattenelementen und zwischen dem Anschlussabschnitt und dem Aufnahmeabschnitt und löttechnische Fügung;
- Öffnen des Formlötwerkzeugs und Entnahme der Kühlplatte aus dem Form lötwerkzeug.

Das erfindungsgemäße Verfahren ist verfahrenstechnisch verbessert und ermöglicht in effizienter Weise die Herstellung von qualitativ hochwertigen Wärmeübertragerplatten mit optimierter Anbindung der Anschlussstutzen an diese.

Eine Wärmeübertragerplatte weist mehrere Anschlussstutzen auf, insbesondere weist ein Plattenkörper einen Anschlussstutzen für die Zuführung und einen Anschlussstutzen für die Ableitung eines Kühlfluids auf. Vorzugsweise sind alle Anschlussstutzen des Plattenkörpers und deren Festlegung an bzw. im Plattenkörper zwischen den Plattenelementen erfindungsgemäß ausgeführt.

Das Formlötwerkzeug ist beheizbar und zur Herstellung der Wärmeübertragerplatten auf eine löttechnisch notwendige Werkzeugtemperatur aufgeheizt.

Ein Plattenstapel ist aus zumindest zwei Plattenelementen aus einem metallischen Werkstoff, insbesondere einem Leichtmetallwerkstoff, gebildet. Zwischen den Plattenelementen ist ein Lotwerkstoff appliziert.

Eine Anschlusskontur ist schalenförmig oder kanalartig und so konfiguriert, dass der Anschlussstutzen mit seinem Anschlussabschnitt zwischen die Aufnahmekonturen positionierbar ist bzw. positioniert werden kann.

Im Rahmen des erfindungsgemäßen Verfahrens werden vorzugsweise und effektiv Plattenelemente verwendet, welche mit einem Lotwerkstoff versehen sind, wobei der Lotwerkstoff in Form einer plattierten Lotschicht auf zumindest eines der Plattenelemente aufgebracht ist. Es werden folglich Plattenelemente bereitgestellt, von denen zumindest ein Plattenelement bereits mit einem Lotwerkstoff versehen ist.

Aus den beiden Plattenelementen wird ein Plattenstapel gebildet. Beim Bilden des Plattenstapels wird der Anschlussstutzen mit seinem Anschlussabschnitt zwischen den Plattenelementen positioniert. Hierzu wird der Anschlussabschnitt zwischen Formabschnitten an den Plattenelementen und den dort vorgeformten Anschlusskonturen angeordnet.

Der Plattenstapel wird in das Warmformwerkzeug eingelegt und das Warmformwerkzeug geschlossen. Der Plattenstapel kann außerhalb des Warmformwerkzeugs gebildet und in das Warmformwerkzeug gebracht werden. Der Plattenstapel kann auch erst im Warmformwerkzeug gebildet werden.

Das Formlötwerkzeug weist ein Unterwerkzeug und ein Oberwerkzeug auf. Diese werden bei der Schließbewegung des Formlötwerkzeugs relativ zueinander verlagert, insbesondere wird das Oberwerkzeug auf das Unterwerkzeug abgesenkt. Bei der Schließbewegung wird der Plattenstapel zwischen dem Unterwerkzeug und dem Oberwerkzeug aufgenommen und einklemmt. Der Plattenstapel gelangt dabei in Flächenkontakt zwischen dem Unterwerkzeug und dem Oberwerkzeug und wird im Formlötwerkzeug aufgeheizt. Das Formlötwerkzeug ist auf eine Werkzeugtemperatur aufgeheizt bei der sowohl der Umformvorgang als auch der löttechnische Fügevorgang durchgeführt wird. Insbesondere beträgt die Werkzeugtemperatur zwischen 540° C und 670° C. Besonders vorteilhaft liegt die Werkzeugtemperatur zwischen 550° C und 640° C.

Beim Schließen des Formlötwerkzeugs werden die Formabschnitte der Plattenelemente um den Anschlussabschnitt des Anschlussstutzens endgeformt und der Aufnahmeabschnitt mit den sich in der Fügeebene zwischen den Plattenelementen erstreckenden Längskehlen ausgeformt. Die Längsstege des Anschlussabschnitts verlaufen in Längsrichtung des Anschlussstutzens. In den Längskehlen jeweils entlang einer Längsseite des Anschlussstutzens verläuft ein Längssteg des Anschlussabschnitts in einer Längskehle im Aufnahmeabschnitt.

Ein Zwischenraum zwischen den Plattenelementen des Plattenstapels wird mit Innendruck beaufschlagt. Ein Zwischenraum ist ein Bereich zwischen den aneinander liegenden Plattenelementen, wobei nicht notwendigerweise ein Spalt zwischen den Plattenelementen im Bereich des Zwischenraums vorhanden sein muss. Die Beaufschlagung des Zwischenraums mit einem Innendruck erfolgt durch Einleiten eines Wirkmediums, insbesondere Stickstoff, in den Zwischenraum. Hierbei wird ein Kanal durch innendrucktechnische Umformung zumindest eines Plattenelementbereichs in eine Kanalkavität in einer oder den Kontaktflächen des Formlötwerkzeugs ausgebildet. Die Zuleitung des Wirkmediums erfolgt über einen der Anschlussstutzen des Plattenstapels.

Das Wirkmedium zur Ausformung des Kanals bzw. der Kanalstruktur im Plattenkörper wird über den Anschlussstutzen bzw. einem der Anschlussstutzen eingeleitet.

Der Lotwerkstoff zwischen den Plattenelementen und den Plattenelementen und dem Anschlussstutzen wird infolge der Werkzeugtemperatur des Formlötwerkzeugs geschmolzen. Die Plattenelemente untereinander ebenso wie der Anschlussstutzen mit den Plattenelementen im Bereich des Aufnahmeabschnitts werden löttechnisch gefügt.

Das Formlötwerkzeug wird nach Abschluss des Formlötvorgangs geöffnet, wobei das Unterwerkzeug und das Oberwerkzeug relativ zueinander verlagert und auseinanderbewegt werden. Der gefügte warme Plattenkörper bzw. die Wärmeübertragerplatte kann nach dem Öffnen des Formlötwerkzeugs aus diesem entnommen werden. Vor der Entnahme kann die Wärmeübertragerplatte im Formlötwerkzeug gehalten und abgekühlt werden. Die Abkühlung erfolgt vorzugsweise bis unterhalb der Schmelztemperatur des Lotwerkstoffs.

Die Plattenelemente und insbesondere deren Fügefläche sind mit Lotwerkstoff versehen. Vor dem Bilden des Plattenstapels und Positionieren des Anschlussstutzens wird der Anschlussabschnitt des Anschlussstutzens mit Lotwerkstoff erster Art versehen. Weiterhin kann der Anschlussstutzen mit einem Lotstoppmittel versehen werden. Das Lotstoppmittel wird ebenfalls auf dem Anschlussstutzen positioniert, beispielsweise in Form eines Lotwerkstoffs zweiter Art, welcher eine höhere Schmelztemperatur besitzt als der Lotwerkstoff erster Art.

Zum Positionieren des Anschlussstutzens kann in diesem ein Anschlag in Form einer Ringwulst vorgesehen sein. Der Anschlussstutzen wird dann mit der Ringwulst stirnseitig an dem aus den Plattenelementen gebildeten Plattenstapel und den dort vorgesehenen Formabschnitten positioniert.

Der Plattenstapel wird bei der Herstellung der Wärmeübertragerplatten zwischen dem Unterwerkzeug und Oberwerkzeug eingespannt. Bei der innendrucktechnischen Umformung und Ausbildung des Kanals wird der Plattenstapel umlaufend entlang aneinander liegender Randbereiche und/oder benachbart zu der Kanalkavität abgedichtet. Die Abdichtung kann durch im Unterwerkzeug und/oder im Oberwerkzeug vorgesehene Druckelemente bewirkt oder unterstützt werden. Solche Druckelemente sind optional und können auch im Bereich des Anschlussstutzens vorgesehen sein. Die Druckelemente können durch eine entsprechende Konturgebung in den Formabschnitten des Unterwerkzeugs und/oder des Oberwerkzeugs ausgebildet sein, beispielsweise durch Abdichtsicken. Die Dichtelemente können umlaufend entlang aneinander liegender Randbereiche von Oberwerkzeug und/oder Unterwerkzeug vorgesehen sein. Die Dichtelemente sind weiterhin so angeordnet, dass der Aufnahmeabschnitt mit dem darin angeordneten Anschlussabschnitt des Anschlussstutzens eingespannt und abgedichtet ist bzw. beim Aufweitvorgang und Lötvorgang eingespannt und abgedichtet wird. Dichtelemente können auch benachbart zu der Kanalkavität vorgesehen sein. Die Dichtelemente gewährleisten einen besonders vorteilhaften Umformvorgang, insbesondere, dass der Umformvorgang im Bereich der Kanalkavität stattfindet sowie im Bereich der Anschlusskontur des Anschlussstutzens. Auf diese Weise ist eine hohe Maßhaltigkeit und Umformgenauigkeit sichergestellt.

Eine Kühlvorrichtung für eine Fahrzeugbatterie weist eine erfindungsgemäße Wärmeübertragerplatte auf, die nach einem erfindungsgemäßen Verfahren hergestellt ist. Die Kühlvorrichtung umfasst die für eine Kühlung einer Fahrzeugbatterie notwendigen Peripheriekomponenten und Vorrichtungsbauteile wie Kühlfluidleitungen, Vorrats- und Ausgleichsbehälter für Kühlfluid, Kühlfluidversorgungs- und/oder -pumpeinheiten und/oder -rückkühler.

Die Erfindung ist nachfolgend anhand von Zeichnungen näher beschrieben. Es zeigen
- Figur 1: einen Ausschnitt aus einer Wärmeübertragerplatte in einer perspektivischen Ansicht von oben;
- Figur 2: einen Ausschnitt der Wärmeübertragerplatte in einer Ansicht von unten;
- Figur 3: einen Anschlussstutzen in einer perspektivischen Darstellung;
- Figur 4: den Anschlussstutzen der Figur 3 mit appliziertem Lotwerkstoff;
- Figur 5: einen Ausschnitt aus einem Plattenkörper einer Wärmeübertragerplatte in einer Draufsicht;
- Figur 6: einen Querschnitt durch den Anschlussbereich eines Anschlussstutzens gemäß der Linie A-A der Figur 5;
- Figur 7: einen Ausschnitt aus einem Plattenkörper im Bereich des Anschlussstutzens;
- Figur 8: wiederum in einer perspektivischen Darstellung eine weitere Ausführungsform eines Anschlussstutzens;
- Figur 9: den Anschlussstutzen der Figur 8 mit appliziertem Lotwerkstoff;
- Figur 10: einen Schnitt durch den Plattenkörper und die Darstellung der Figur 7 entlang der Linie B-B;
- Figur 11: einen Ausschnitt aus einer weiteren Ausführungsform einer Wärmeübertragerplatte in einer Perspektive;
- Figur 12: eine Ansicht auf einen Ausschnitt aus einem Plattenelement und dem in einer Aufnahmekontur des Aufnahmeabschnitts positionierten Anschlussstutzen;
- Figur 13: wiederum einen Ausschnitt aus einem Plattenkörper mit Anschlussstutzen mit einer Ansicht auf ein Plattenelement und einer Modifikation im Anschlussbereich des Anschlussstutzens und
- Figur 14: einen Ausschnitt aus einem Plattenkörper mit der Darstellung einer weiteren Anschlusskonfiguration.

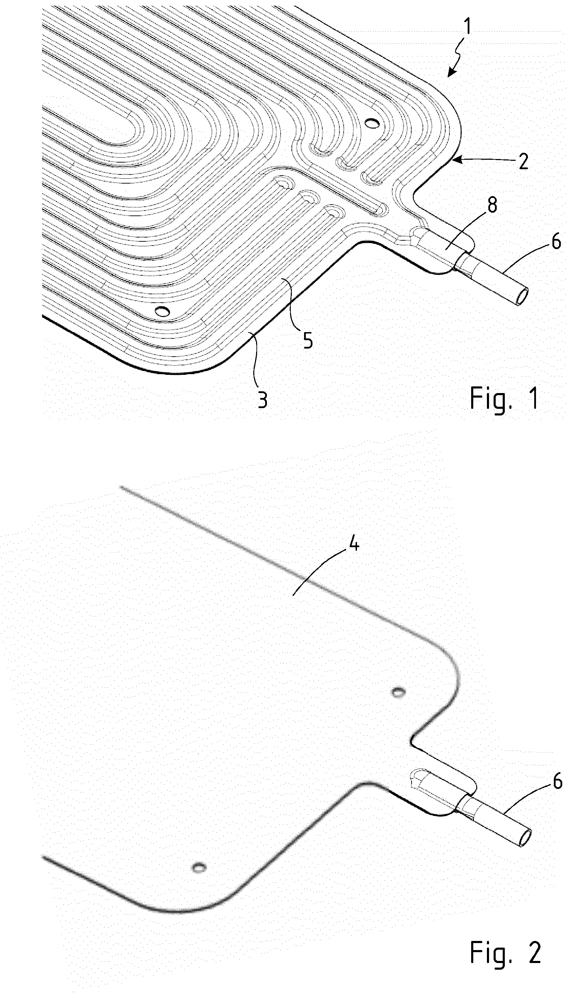

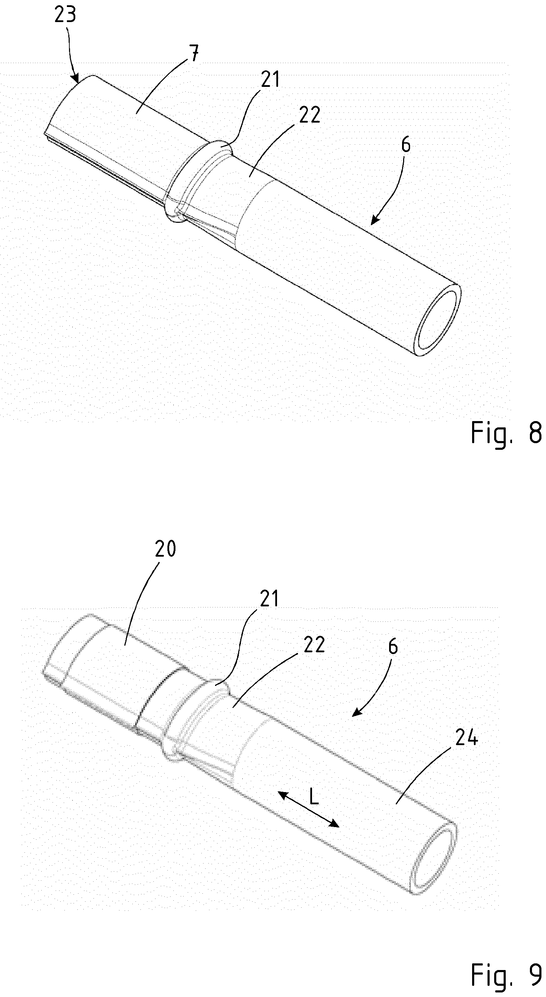

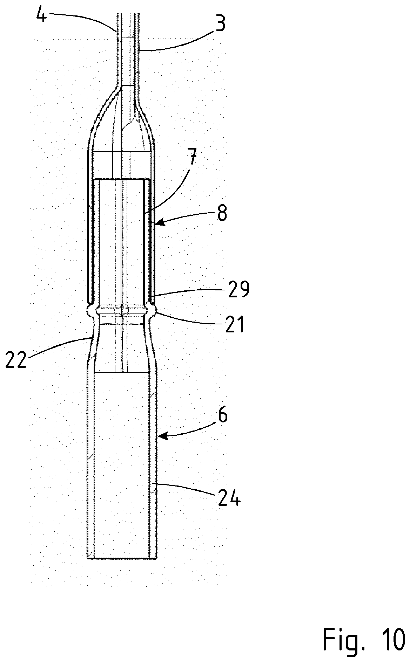

Anhand der Figuren 1 bis 14 ist eine erfindungsgemäße Wärmeübertragerplatte 1 und deren Herstellung sowie Modifikationen des Anschlusses für eine Kühlfluidleitung an eine Wärmeübertragerplatte 1 erläutert. In den Figuren werden für gleiche und funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

Die Figuren 1 bis 6 dienen zur Erläuterung eines ersten Ausführungsbeispiels einer Wärmeübertragerplatte 1.

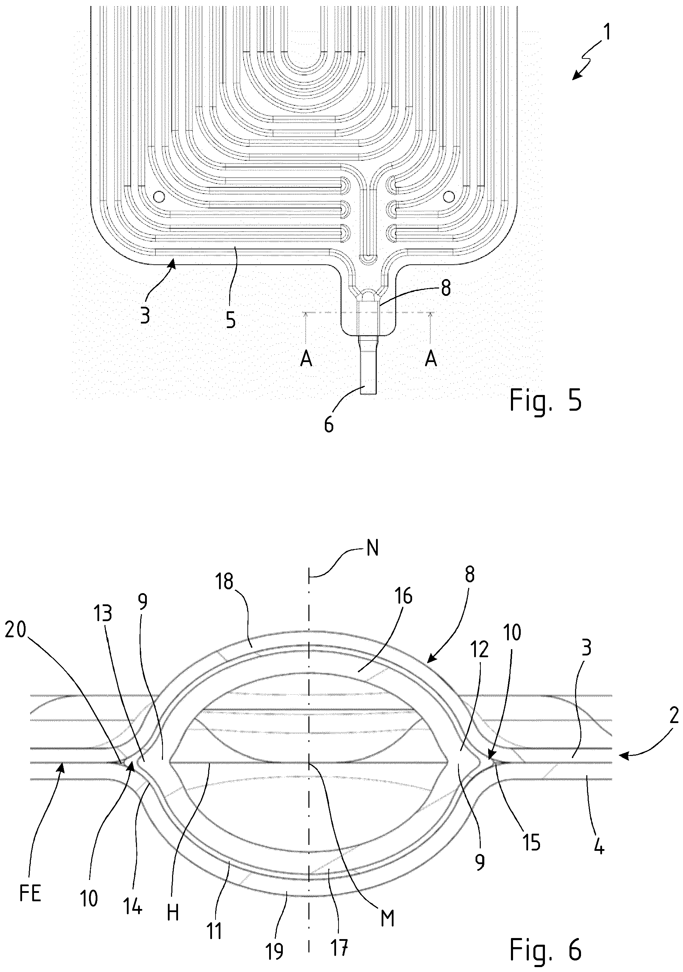

Anhand der Figuren 6 bis 10 wird ein zweites Ausführungsbeispiel einer Kühlplatte 1 erläutert. Die Querschnittsdarstellung in der Figur 6 trifft für beide Ausführungsformen der Kühlplatte 1 zu. Gleiches gilt für die Ausgestaltung eines Plattenkörpers 2 einer Kühlplatte 1 und die den Plattenkörper 2 bildenden Plattenelemente 3, 4.

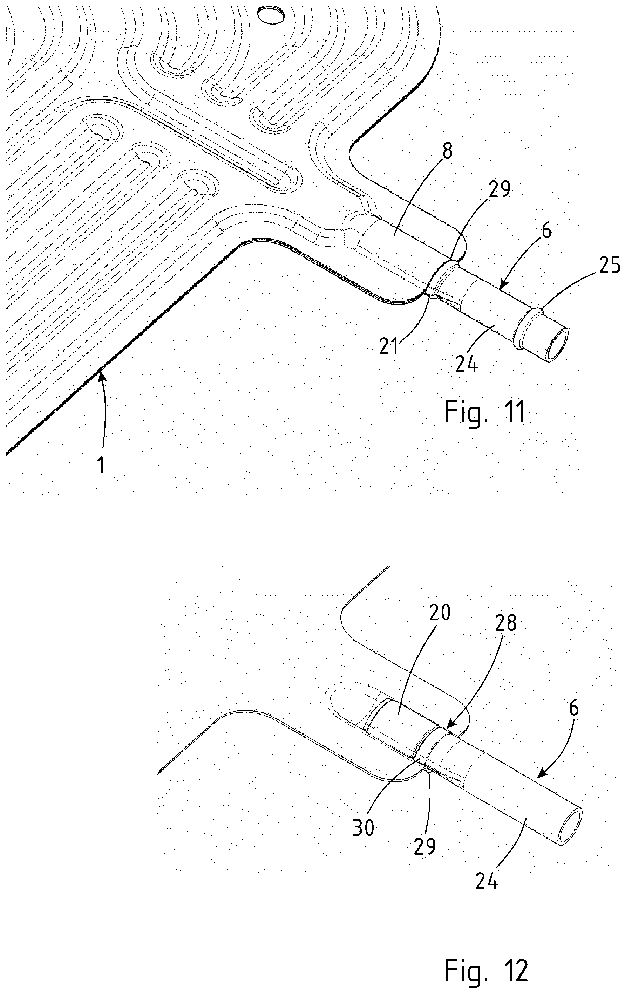

Die Figuren 11 bis 13 zeigen Modifikationen des Anschlusses für eine Kühlfluidleitung.

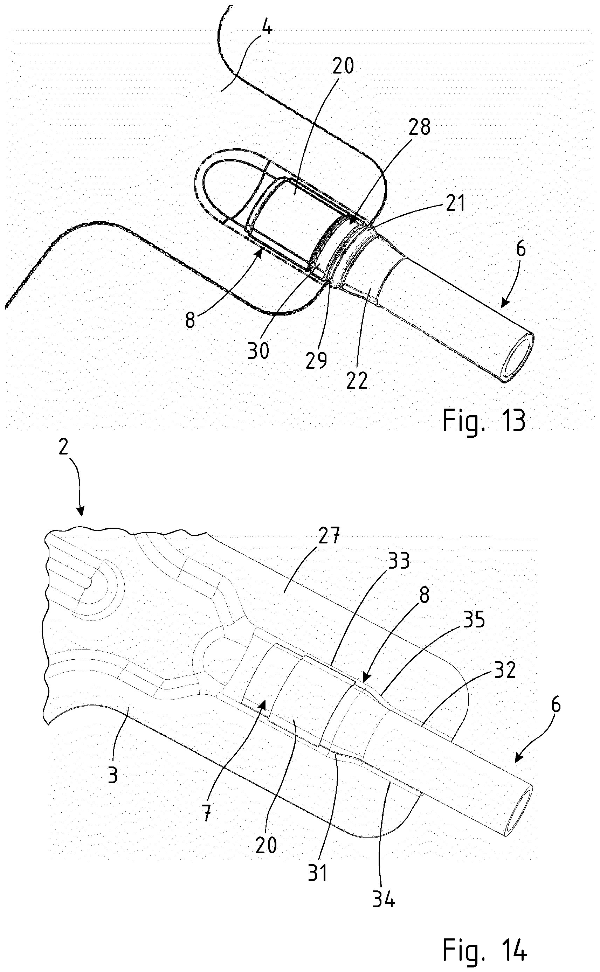

Die Figur 14 dient zur Erläuterung einer weiteren Ausführungsform einer Kühlplatte 1 und der Konfiguration des Anschlusses für eine Kühlfluidleitung.

Bei der Wärmeübertragerplatte 1 handelt es sich insbesondere um eine Kühlplatte zur Batteriekühlung, insbesondere für eine Fahrzeugbatterie eines Kraftfahrzeugs. Die Wärmeübertragerplatte 1 weist einen aus zwei Plattenelementen 3, 4 gebildeten Plattenkörper 2 auf. Bei dem Plattenelement 3 handelt es sich um eine Kanalplatte, die eine Kanalstruktur aus zumindest einem Kanal 5 aufweist (siehe insbesondere Figuren 1, 5 sowie 11). Bei dem Plattenelement 4 handelt es sich um eine vollständige oder nahezu vollständig ebene Bodenplatte (siehe Figur 2).

Die beiden Plattenelemente 3, 4 sind flächig aufeinander positioniert und bilden einen Plattenstapel. Die aneinander liegenden Flächen der Plattenelemente 3, 4 sind ganz oder bereichsweise mit einem Lotwerkstoff versehen. Insbesondere ist ein Lotwerkstoff in Form einer plattierten Lotschicht auf einem der Plattenelemente 3, 4 vorappliziert.

Die aneinander liegenden Flächen der Plattenelemente 3, 4 sind ganz oder bereichsweise miteinander gefügt. An dem Plattenkörper 2 ist ein Anschlussstutzen 6 für ein Kühlfluid angeschlossen. Der Anschlussstutzen 6 dient zur Zuleitung oder Ableitung eines Kühlfluids. Üblicherweise ist ein Anschlussstutzen 6 für die Zuleitung eines Kühlfluids vorgesehen, wohingegen über einen weiteren Anschlussstutzen 6 die Ableitung eines Kühlfluids erfolgt.

Der Anschlussstutzen 6 besitzt einen Anschlussabschnitt 7, der in einem zwischen den Plattenelementen 3, 4 ausgebildeten Aufnahmeabschnitt 8 des Plattenkörpers 2 gefügt ist.

Der Anschlussabschnitt 7 weist im Querschnitt eine ellipsenförmige Außenkontur auf.

Der Anschlussabschnitt 7 des Anschlussstutzens 6 weist im Querschnitt eine Hauptachse H sowie eine senkrecht darauf stehende Nebenachse N auf. Die Hauptachse H entspricht der Mittelquerachse und beschreibt die größte Abmessung des Anschlussabschnitts 7. Die Hauptachse H erstreckt sich in der Fügeebene FE der Plattenelemente 3, 4. Die Nebenachse N ist die kleinste Abmessung des Anschlussabschnitts 7 in radialer Richtung nach außen.

Der Anschlussabschnitt 7 weist zwei nach außen gerichtete Längsstege 9 auf. Die Längsstege 9 liegen auf der Hauptachse H des Anschlussstutzens 6 einander gegenüber. Die Längsstege 9 sind materialeinheitlich einstückiger Bestandteil des Anschlussabschnitts 7 und vom Inneren des Anschlussstutzens 6 nach außen gerichtet.

Der Anschlussabschnitt 7 des Anschlussstutzens 6 liegt im Aufnahmeabschnitt 8 des Plattenkörpers 2 und ist mit diesem stoffschlüssig gefügt. Der Aufnahmeabschnitt 8 weist sich im Bereich der Fügeebene FE zwischen den Plattenelementen 3, 4 erstreckende Längskehlen 10 auf. Die Längsstege 9 des Anschlussabschnitts 7 verlaufen in Längsrichtung L des Aufnahmeabschnitts 8 in den Längskehlen 10.

Die Längsstege 9 und die Längskehle 10 sind zueinander komplementär ausgebildet. Das bedeutet, dass die Kontur der Längskehlen 10 und die Kontur der Längsstege 9 sich unter Ausbildung eines Fügespalts 11 ergänzen. Die Längsstege und die Längskehlen wirken Nut-/Feder-artig zusammen.

Die Längsstege 9 sind im Querschnitt dreieckförmig konfiguriert und weisen Stegwände 12 auf, die konkav gekrümmt verlaufen und in einer gerundeten Spitze 13 enden (siehe hierzu insbesondere Figur 6).

Die Längskehlen 10 sind im Querschnitt trichterförmig konfiguriert mit konkaven Kehlwangen 14 und einem keilförmigen Kehlgrund 15. Auch diesbezüglich ist insbesondere auf die Darstellung der Figur 6 zu verweisen.

Die Angaben konvex und konkav beziehen sich jeweils auf den Mittelpunkt M des Anschlussstutzens 6.

Der Anschlussabschnitt 7 weist einen konvex gekrümmt verlaufenden oberen Wandabschnitt 16 und einen konvex gekrümmt verlaufenden unteren Wandabschnitt 17 auf. Jeweils beidseitig schließen sich an die Wandabschnitte 16, 17 die Längsstege 9 an. Die Wandabschnitte 16, 17 gehen in die Stegwände 12 der Längsstege 9 über.

Der Aufnahmeabschnitt 8 weist konvex gekrümmte verlaufende Aufnahmewandabschnitte 18, 19 auf, die jeweils in eine Kehlwange 14 übergehen.

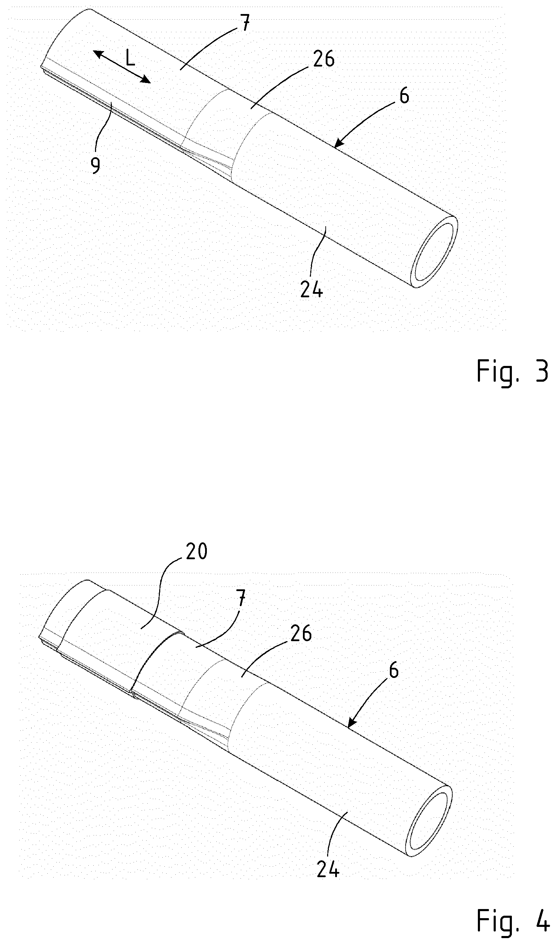

Der Anschlussabschnitt 7 ist im Aufnahmeabschnitt 8 durch einen im Fügespalt 11 applizierten Lotwerkstoff 20 stoffschlüssig gefügt. Hierzu ist ein Lotwerkstoff 20 um den Anschlussabschnitt 7 des Anschlussstutzens 6 gelegt. Die Figur 3 zeigt den Anschlussstutzen 6 ohne und die Figur 4 mit appliziertem Lotwerkstoff 20. Bei der formlöttechnischen Verbindung der Plattenelemente 3, 4 und des Anschlussabschnitts 7 wird der Lotwerkstoff 20 aufgeschmolzen, der Fügespalt 11 vollflächig mit Lotwerkstoff 20 benetzt und ausgefüllt und die Bauteile stoffschlüssig gefügt.

Die Querschnittskontur des Anschlussabschnitts 7 kann als Zitronenform beschrieben werden, wobei sich die Querschnittsangabe auf einen Längsschnitt durch eine Zitrone bezieht.

Die Außenkontur des Anschlussabschnitts 7 und die Innenkontur des Aufnahmeabschnitts 8 sind komplementär zueinander gestaltet unter Ausbildung des Fügespalts 11.

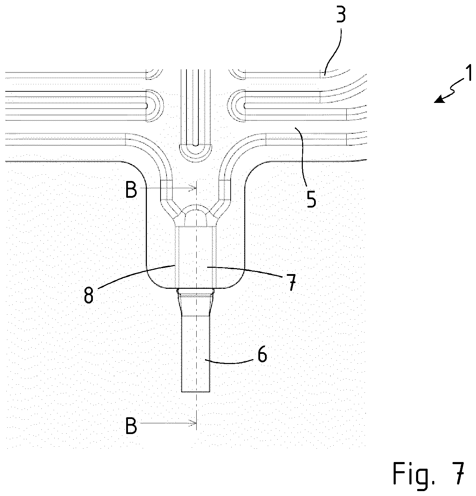

Die Ausführungsform der Kühlplatte 1, wie anhand der Figuren 6 bis 10 illustriert, unterscheidet sich in der Ausgestaltung des Anschlussstutzens 6. Bei dem Anschlussstutzen 6, wie in den Figuren 7 bis 10 zu erkennen, ist ein Anschlag vorgesehen. Der Anschlag ist in Form einer Ringwulst 21 ausgeführt. Die Ringwulst 21 ist aus der Wand des Anschlussstutzens 6 durch Stauchen und Schubdruckumformen geformt. Hierfür ist der Anschlussstutzen 6 in einem Einschnürungsbereich 22 eingezogen, an welchen sich die Ringwulst 21 nach außen gestülpt anschließt. In Richtung zur plattenkörperseitigen Öffnung 23 des Anschlussstutzens 6 schließt sich an die Ringwulst 21 der Anschlussabschnitt 7 an. Der Anschlussabschnitt 7 ist konfiguriert wie zuvor beschrieben und insbesondere in der Figur 6 dargestellt.

Der freie Endabschnitt eines Anschlussstutzens 6, welcher gegenüber dem Plattenkörper 2 vorsteht, ist als Koppelabschnitt 24 ausgebildet und dient zum Anschluss einer Kühlfluidleitung, die am Koppelabschnitt 24 festgelegt werden kann.

Bei der Ausführungsform eines Anschlussstutzens 6, wie in der Figur 11 zu erkennen, ist im Koppelabschnitt 24 ein Widerlagerkörper vorgesehen, welcher in Form einer Ringwulst 25 ausgebildet ist. Die Ringwulst 25 ist aus der Wand des Koppelabschnitts 24 ausgeformt. Eine Kühlfluidleitung, insbesondere ein Kühlfluidschlauch, kann auf den Koppelabschnitt 24 und den dort integrierten Widerlagerkörper in Form der Ringwulst 25 aufgeschoben werden und mittels eines geeigneten Befestigungsmittels, beispielsweise einer Federklemme, fixiert werden.

Der Koppelabschnitt 24 des Anschlussstutzens 6 ist im Querschnitt kreisrund. Bei der Ausführungsform des Anschlussstutzens 6, wie in den Figuren 3 und 4 gezeigt, geht der kreisrunde Querschnitt des Koppelabschnitts 24 über einen Übergangsabschnitt 26 kontinuierlich in den Anschlussabschnitt 7 und dessen Querschnittskonfiguration über.

Zur stoffschlüssigen Fügung des Anschlussabschnitts 7 im Aufnahmeabschnitt 8 ist ein Lotwerkstoff 20 in Form einer Lothülse oder eines Lotstreifens auf dem Anschlussabschnitt 7 appliziert. Der Anschlussstutzen 6 ist mit dem Anschlussabschnitt 7 in den Aufnahmeabschnitt 7 des Plattenkörpers 2 positioniert und wird mit diesem formlöttechnisch verbunden.

Zur Herstellung einer Kühlplatte 1 mit zumindest einem Anschlussstutzen 6 wird ein Anschlussstutzen 6 bereitgestellt, an welchen ein Anschlussabschnitt 7 mit zwei nach außen gerichteten Längsstegen 9 und bogenförmig gerundet verlaufenden Wandabschnitten 16, 17 ausgeformt ist. Weiterhin werden ein erstes und ein zweites Plattenelement 3, 4 bereitgestellt. Die beiden Plattenelemente 3, 4 sind eben. Zumindest eines der Plattenelemente 3, 4 ist mit einem Lotwerkstoff versehen. Jedes Plattenelement 3, 4 weist einen vorstehenden Formabschnitt 27 auf. In den Formabschnitten 27 ist jeweils eine Aufnahmekontur für den Anschlussabschnitt 7 des Anschlussstutzens 6 eingeformt. Aus den beiden Plattenelementen 3, 4 wird ein Plattenstapel gebildet, wobei der Anschlussabschnitt 7 des Anschlussstutzens 6 zwischen den Formabschnitten 27 und den dort vorgesehenen Aufnahmekonturen angeordnet wird. Auf dem Anschlussabschnitt 7 ist ein Lotwerkstoff 20 appliziert.

Die Plattenelemente 3, 4 werden in ein beheiztes Formlötwerkzeug überführt. Hierzu kann ein Plattenstapel aus den beiden Plattenelementen mit dazwischen eingegliedertem Anschlussstutzen 6 außerhalb des Formlötwerkzeugs gebildet werden. Der Plattenstapel kann auch im Formlötwerkzeug gebildet werden.

Der Plattenstapel bzw. die Plattenelemente 3, 4 und der Anschlussstutzen 6 mit dem positionierten Anschlussabschnitt 7 werden in das beheizte Formlötwerkzeug eingelegt. Der Anschlussstutzen 7 des Anschlussstutzens 6 ist zwischen den Plattenelementen 3, 4 in den sich zu einem Aufnahmeabschnitt 8 ergänzenden Aufnahmekonturen angeordnet. Das Formlötwerkzeug weist ein Unterwerkzeug und ein Oberwerkzeug auf. Durch Schließen des Formlötwerkzeugs wird der Plattenstapel zwischen dem Oberwerkzeug und dem Unterwerkzeug eingeklemmt und erwärmt. Der Plattenstapel liegt mit seiner Unterseite in Flächenkontakt mit dem Unterwerkzeug und mit seiner Oberseite in Flächenkontakt mit dem Oberwerkzeug.

Beim Schließen des Formlötwerkzeugs werden die Formabschnitte 27 im Bereich der Aufnahmekonturen der Plattenelemente 3, 4 endgeformt und an die Außenkontur des Anschlussabschnitts 7 geformt. Hierbei bildet sich ein Fügespalt 11 aus, in welchen der Lotwerkstoff 20 verpresst wird. Die umgeformten Formabschnitte 27 ergänzen sich zum Aufnahmeabschnitt 8 mit im Bereich der Fügeebene FE zwischen den Plattenelementen 3, 4 sicher erstreckenden Längskehlen 10.

Bei geschlossenem Formlötwerkzeug wird der zwischen dem Unterwerkzeug und dem Oberwerkzeug eingespannte Plattenstapel aufgeheizt. Ein Zwischenraum zwischen den Plattenelementen 3, 4 wird mit Innendruck beaufschlagt. Dies erfolgt durch Einleitung eines Wirkmediums, in der Regel Stickstoff, in einen Zwischenraum zwischen den Plattenelementen 3, 4. Hierdurch wird ein Kanal 5 durch innendrucktechnische Umformung ausgebildet. Bei der Kanalausformung wird ein Plattenelementbereich des oberen Plattenelements 3, welches die Kanalplatte bildet, in eine Kanalkavität im Oberwerkzeug geformt. Kanalabschnitte des Kanals 5 verlaufen schleifenförmig ineinander und kommunizieren zwischen dem hier dargestellten Anschlussstutzen 6 und einem weiteren nicht dargestellten Anschlussstutzen.

Bei der innendrucktechnischen Umformung im Formlötwerkzeug kann der Plattenstapel umlaufend entlang aneinander liegender Randbereiche und/oder benachbart zu der Kanalkavität und insbesondere im Bereich des Aufnahmeabschnitts der Plattenelemente 3, 4 mittels eines oder mehrerer Druckelemente abgedichtet werden. Druckelemente können als Dichtleisten im Oberwerkzeug und/oder Unterwerkzeug vorgesehen sein und sind dafür vorgesehen und bestimmt den Plattenstapel bzw. die beiden Plattenelemente 3, 4 umlaufend entlang der äußeren Randbereiche sowie benachbart zur Kanalkavität und dem Aufnahmeabschnitt 8 mit dem darin aufgenommenen Anschlussabschnitt 7 des Anschlussstutzens 6 abzudichten. Druckelemente können beispielsweise in Form von sickenförmigen Körpern realisiert sein.

Der zwischen den Plattenelementen 3, 4 applizierte Lotwerkstoff und der Lotwerkstoff 20, der zwischen dem Aufnahmeabschnitt 8 und dem Anschlussabschnitt 7 appliziert ist, schmilzt bzw. ist beim Aufheizen der Plattenelemente 3, 4 geschmolzen. Es erfolgt eine stoffschlüssige Fügung zwischen den Fügepartnern. Nach dem Ausformen der Kanalstruktur mit dem Kanal 5 und Abschluss des Lötvorgangs wird das Formlötwerkzeug geöffnet und die Kühlplatte 1 aus dem Formlötwerkzeug entnommen.

Die Kühlplatte 1 kann nach dem Öffnen des Formlötwerkzeugs und vor der Entnahme im Formlötwerkzeug gehalten und abgekühlt werden. Hierzu kann die Kanalplatte 1 beim bzw. nach dem Öffnen des Formlötwerkzeugs durch Manipulatorelemente vom Unterwerkzeug abgehoben werden, so dass der Kontakt zwischen Unterwerkzeug und der noch warmen Kanalplatte aufgehoben wird. Das Oberwerkzeug ist geöffnet und befindet sich ebenfalls nicht mehr in Kontakt mit der Kühlplatte. Nach einer Halte- bzw. Abkühlzeit wird die Kühlplatte 1 dann auch dem Formlötwerkzeug entnommen.

Zur Verbesserung des Lötvorgangs, insbesondere zur Begrenzung der Benetzung mit Lotwerkstoff bzw. des Abflusses von Lötwerkstoff kann ein Lotstoppmittel 28 in die Anordnung von Anschlussstutzen 6 und Aufnahmeabschnitt 8 integriert sein. Das Lotstoppmittel 28 kann durch die Ringwulst 21 gebildet sein, die stirnseitig an der Öffnung 29 des Aufnahmeabschnitts 8 anliegt.

Insbesondere ist das Lotstoppmittel 28 durch eine Lage, einen Ring oder eine Hülse aus einem Dichtmetallstoff 30 gebildet. Solche Ausgestaltungen zeigen die Darstellungen der Figuren 12 und 13. Das Lotstoppmittel 28 ist aus einem Dichtmetall 30 ausgeführt, das eine höhere Schmelztemperatur hat als der Lotwerkstoff 20 erster Art. Das Lotstoppmittel 28 ist im Bereich der Öffnung 29 des Anschlussabschnitts 8 im Inneren des Aufnahmeabschnitts 8 vor den Lotwerkstoff 20 angeordnet.

Bei der Ausführungsform, wie in der Figur 13 dargestellt, ist das Lotstoppmittel 28 im Bereich der Öffnung 29 zwischen dem Ringwulst 21 und dem Lotwerkstoff 20 angeordnet.

Bei dem Dichtmetall 30 kann es sich auch um einen Lotwerkstoff zweiter Art handeln, der eine höhere Schmelztemperatur hat als der Lotwerkstoff 20 erster Art. Aufgrund seiner höheren Schmelztemperatur des Lotwerkstoffs erster Art wird dieser unter der Temperatureinwirkung im Formlötwerkzeug dickflüssig und plastisch verformbar, so dass eine vollflächige Dichtwirkung im vorgesehenen Bereich der formlöttechnischen Fügung zwischen Anschlussstutzen 6, Anschlussabschnitt 7 und Aufnahmeabschnitt 8 bewirkt wird.

Die Figur 14 zeigt einen Ausschnitt aus einem Plattenkörper 2 mit einer Ansicht auf ein Plattenelement 3 und dem im Formabschnitt 27 ausgebildeten Aufnahmeabschnitt 8. Der Anschlussabschnitt 7 des Anschlussstutzens 8 ist im Aufnahmeabschnitt 8 positioniert.

Der Anschlussabschnitt 7 ist im Querschnitt so konfiguriert wie anhand der Figur 6 erläutert.

Der Anschlussabschnitt 7 verjüngt sich über einen Übergangsabschnitt 31 in einen Längenabschnitt 32. Im Längenabschnitt 32 ist der Anschlussstutzen 6 kreisrund.

Auch der Aufnahmeabschnitt 8 weist zwei Längenabschnitte 33, 34 mit unterschiedlichen Querschnitten auf. Ein plattenkörperseitiger Längenabschnitt 33 ist konfiguriert wie anhand der Figur 6 beschrieben. Über einen Übergangsabschnitt 35 geht der plattenkörperseitige, innen liegende Längenabschnitt 33 in den öffnungsseitigen Längenabschnitt 34 über, der an die kreisrunde Kontur des Längenabschnitts 32 angepasst ist.

Auf dem Anschlussabschnitt 7 ist ein Lotwerkstoff 20 aufgebracht. Die Querschnittsveränderung im Anschlussabschnitt 7 und im Aufnahmeabschnitt 8 bildet ein Lotstoppmittel 28. Das durch die Querschnittsveränderung im Übergang vom Anschlussabschnitt 7 zum Längenabschnitt 32 und im Übergang vom Längenabschnitt 33 zum Längenabschnitt 34 des Aufnahmeabschnitts 8 ausgebildete Lotstoppmittel 28 begrenzt den Lotfluss bei der Herstellung der Lötverbindung zwischen dem Anschlussstutzen 6 bzw. dem Anschlussabschnitt 7 und dem Aufnahmeabschnitt 8.

### Bezugszeichen:

- 1 -: Wärmeübertragerplatte
- 2 -: Plattenkörper
- 3 -: Plattenelement
- 4 -: Plattenelement
- 5 -: Kanal
- 6 -: Anschlussstutzen
- 7 -: Anschlussabschnitt
- 8 -: Aufnahmeabschnitt
- 9 -: Längssteg
- 10 -: Längskehle
- 11 -: Fügespalt
- 12 -: Stegwand
- 13 -: Spitze
- 14 -: Kehlwange
- 15 -: Kehlgrund
- 16 -: Wandabschnitt
- 17 -: Wandabschnitt
- 18 -: Aufnahmewandabschnitt
- 19 -: Aufnahmewandabschnitt
- 20 -: Lotwerkstoff erster Art
- 21 -: Ringwulst
- 22 -: Einschnürungsbereich
- 23 -: Öffnung
- 24 -: Koppelabschnitt
- 25 -: Ringwulst
- 26 -: Übergangsabschnitt
- 27 -: Formabschnitt
- 28 -: Lotstoppmittel
- 29 -: Öffnung
- 30 -: Lotwerkstoff zweiter Art
- 31 -: Übergangsabschnitt
- 32 -: Längenabschnitt
- 33 -: Längenabschnitt
- 34 -: Längenabschnitt
- 35 -: Übergangsabschnitt

- H -: Hauptachse
- N -: Nebenachse
- FE -: Fügeebene
- M -: Mittelpunkt
- L -: Längsrichtung

## Patentansprüche

1. Wärmeübertragerplatte, welche einen aus mindestens zwei Plattenelementen (3, 4) gebildeten Plattenkörper (2) und einen Anschlussstutzen (6) für ein Kühlfluid aufweist, wobei der Anschlussstutzen (6) einen Anschlussabschnitt (7) besitzt, der in einem zwischen den Plattenelementen (3, 4) ausgebildeten Aufnahmeabschnitt (8) des Plattenkörpers (2) gefügt ist, **dadurch gekennzeichnet, dass** der Anschlussabschnitt (7) zwei nach außen gerichtete Längsstege (9) aufweist und der Aufnahmeabschnitt (8) sich im Bereich der Fügeebene (FE) zwischen den Plattenelementen (3, 4) erstreckende Längskehlen (10) aufweist, wobei die Längsstege (9) in den Längskehlen (10) verlaufen.

2. Wärmeübertragerplatte nach Anspruch 1, **dadurch gekennzeichnet, dass** die Längsstege (9) im Querschnitt dreieckförmig konfiguriert sind mit konkaven Stegwänden (12) und einer gerundeten Spitze (13).

3. Wärmeübertragerplatte nach Anspruch 1 oder 2, **dadurch gekennzeichnet, dass** die Längskehlen (10) im Querschnitt trichterförmig konfiguriert sind mit konkaven Kehlwangen (14) und einem keilförmigen Kehlgrund (15).

4. Wärmeübertragerplatte nach einem der Ansprüche 1 bis 3, **dadurch gekennzeichnet, dass** die Längsstege (9) und die Längskehlen (10) zueinander komplementär ausgebildet sind.

5. Wärmeübertragerplatte nach einem der Ansprüche 1 bis 4, **dadurch gekennzeichnet, dass** der Anschlussabschnitt (7) zwei konvex gekrümmte Wandabschnitte (16, 17) aufweist, die zwischen den Längsstegen (9) verlaufen.

6. Wärmeübertragerplatte nach einem der Ansprüche 1 bis 5, **dadurch gekennzeichnet, dass** der Aufnahmeabschnitt (8) konvex gekrümmt verlaufende Aufnahmewandabschnitte (18, 19) aufweist, an welche sich die Kehlwangen (14) anschließen.

7. Wärmeübertragerplatte nach einem der Ansprüche 1 bis 6, **dadurch gekennzeichnet, dass** der Anschlussabschnitt (7) parallel zur Fügeebene (FE) verlaufende Wandabschnitte aufweist, die jeweils endseitig über gekrümmt verlaufende Wandabschnitt in die Längsstege übergeben.

8. Wärmeübertragerplatte nach einem der Ansprüche 1 bis 7, **dadurch gekennzeichnet, dass** der Anschlussstutzen (6) einen Anschlag aufweist, insbesondere in Form einer Ringwulst (21), welcher stirnseitig am Aufnahmeabschnitt (8) anliegt.

9. Wärmeübertragerplatte nach einem der Ansprüche 1 bis 8, **dadurch gekennzeichnet, dass** zwischen dem Anschlussstutzen (6), insbesondere zwischen dem Anschlussabschnitt (7) des Anschlussstutzens (6), und dem Aufnahmeabschnitt (8) ein Lotstoppmittel (28) vorgesehen ist.

10. Wärmeübertragerplatte nach einem der Ansprüche 1 bis 9, **dadurch gekennzeichnet, dass** der Anschlussstutzen (6) einen Koppelabschnitt (24) mit einem Widerlagerkörper aufweist, insbesondere in Form einer Ringwulst (25).

11. Verfahren zur Herstellung einer Wärmeübertragerplatte mit einem Anschlussstutzen (6), **gekennzeichnet durch** folgende Schritte:
- Bereitstellen eines Anschlussstutzens (6), welcher einen Anschlussabschnitt (7) mit zwei nach außen gerichteten Längsstegen (9) aufweist;
- Bereitstellen eines ersten Plattenelements (3) und eines zweiten Plattenelements (4), wobei das erste Plattenelement (3) und das zweite Plattenelement (4) eine Aufnahmekontur für den Anschlussabschnitt (7) aufweisen;
- Überführen des ersten Plattenelements (3) und des zweiten Plattenelements (4) in ein beheiztes Formlötwerkzeug, welches ein Unterwerkzeug und ein Oberwerkzeug aufweist, wobei der Anschlussabschnitt (7) des Anschlussstutzens (6) zwischen Formabschnitten (27) der Plattenelemente (3, 4) positioniert wird und zwischen dem Anschlussabschnitt (7) und den Plattenelementen (3, 4) ein Lotwerkstoff (20) angeordnet ist;
- Schließen des Formlötwerkzeugs und Einklemmen des Plattenstapels zwischen dem Unterwerkzeug und dem Oberwerkzeug, wobei die die Aufnahmekonturen in den Formabschnitten (27) der Plattenelemente (3, 4) um den Anschlussabschnitt (7) des Anschlussstutzens (6) endgeformt werden und ein Aufnahmeabschnitt (8) mit sich im Bereich der Fügeebene (FE) zwischen den Plattenelementen (3, 4) erstreckenden Längskehlen (10) gebildet wird;
- Aufheizen des Plattenstapels;
- Beaufschlagung eines Zwischenraums zwischen den Plattenelementen (3, 4) des Plattenstapels mit Innendruck durch Einleiten eines Wirkmediums über den Anschlussstutzen (6) in den Zwischenraum und Ausbilden eines Kanals in zumindest einem Plattenelement (3, 4);
- Schmelzen des Lotwerkstoffs (20) zwischen den Plattenelementen (3, 4) und zwischen dem Anschlussabschnitt (7) und dem Aufnahmeabschnitt (8) und löttechnische Fügung;
- Öffnen des Formlötwerkzeugs und Entnahme der Kühlplatte (1) aus dem Form lötwerkzeug.

12. Verfahren nach Anspruch 11, **dadurch gekennzeichnet, dass** die Kühlplatte (1) nach dem Öffnen des Formlötwerkzeugs und vor der Entnahme im Formlötwerkzeug gehalten und abgekühlt wird.

## Claims

1. Heat exchanger plate, having a plate body (2) , formed from at least two plate elements (3, 4) and a connection part (6) for a cooling fluid, wherein the connection part (6) has a connection section (7) which is fitted in a receiving section (8) of the plate body (2) formed between the plate elements (3, 4), **characterized in that** the connecting section (7) has two outwardly directed longitudinal webs (9) and the receiving section (8) has longitudinal grooves (10) extending in the region of the joining plane (FE) between the plate elements (3, 4), wherein the longitudinal webs (9) run in the longitudinal grooves (10).

2. Heat exchanger plate according to claim 1, **characterized in that** the longitudinal webs (9) are configured triangularly in cross-section with concave web walls (12) and a rounded tip (13).

3. Heat exchanger plate according to claim 1 or 2, **characterized in that** the longitudinal grooves (10) are configured in a funnel-shaped cross-section with concave groove cheeks (14) and a wedge-shaped groove base (15).

4. Heat exchanger plate according to any one of claims 1 to 3, **characterized in that** the longitudinal webs (9) and the longitudinal grooves (10) are complementary to one another.

5. Heat exchanger plate according to any one of claims 1 to 4 , **characterized in that** the connection section (7) has two convexly curved wall sections (16, 17) which run between the longitudinal webs (9).

6. Heat exchanger plate according to any one of claims 1 to 5, **characterized in that** the receiving section (8) has convexly curved receiving wall sections (18, 19) to which the throat cheeks (14) adjoin.

7. Heat exchanger plate according to any one of claims 1 to 6, **characterized in that** the connecting section (7) has wall sections running parallel to the joining plane (FE), which each end via curved wall sections into the longitudinal webs.

8. Heat exchanger plate according to any one of claims 1 to 7, **characterized in that** the connecting part (6) has a stop, in particular in the shape of an annular bead (21), which rests on the front side of the receiving section (8).

9. Heat exchanger plate according to any one of claims 1 to 8, **characterized in that** a solder stop means (28) is provided between the connection part (6), in particular between the connection section (7) of the connection part (6), and the receiving section (8).

10. Heat exchanger plate according to any one of claims 1 to 9, **characterized in that** the connecting part (6) has a coupling section (24) with an abutment body, in particular in the shape of an annular bead (25).

11. Method for producing a heat exchanger plate with a connecting part (6), **characterized by** the following steps:
- providing a connecting part (6) which has a connecting section (7) with two outwardly directed longitudinal webs (9);
- providing a first plate element (3) and a second plate element (4), wherein the first plate element (3) and the second plate element (4) have a receiving contour for the connection section (7);
- transferring the first plate element (3) and the second plate element (4) into a heated form soldering tool which has a lower tool and an upper tool, wherein the connection section (7) of the connection part (6) is positioned between mould sections (27) of the plate elements (3, 4) and a solder material (20) is arranged between the connection section (7) and the plate elements (3, 4);
- closing the form soldering tool and clamping the plate stack between the lower tool and the upper tool, whereby the receiving contours in the mould sections (27) of the plate elements (3, 4) are finally formed around the connection section (7) of the connection part (6) and a receiving section (8) is formed with longitudinal grooves (10) extending in the region of the joining plane (FE) between the plate elements (3, 4);
- heating the plate stack;
- applying internal pressure to an intermediate space between the plate elements (3, 4) of the plate stack by introducing an active medium into the intermediate space via the connecting part (6) and forming a channel in at least one plate element (3, 4);
- melting the solder material (20) between the plate elements (3, 4) and between the connecting section (7) and the receiving section (8) and joining them by soldering;
- opening the form soldering tool and removing the cooling plate (1) from the form soldering tool.

12. Method according to claim 11, **characterized in that** the cooling plate (1) is held and cooled in the form soldering tool after opening the form soldering tool and before removal.

## Revendications

1. Plaque d'échangeur de chaleur, laquelle présente un corps (2) de plaque formé à partir d'au moins deux éléments (3, 4) de plaque et une tubulure de raccordement (6) pour un fluide de refroidissement, dans laquelle la tubulure de raccordement (6) possède une section de raccordement (7), qui est assemblée dans une section de réception (8), réalisée entre les éléments (3, 4) de plaque, du corps (2) de plaque, **caractérisée en ce que** la section de raccordement (7) présente deux entretoises longitudinales (9) dirigées vers l'extérieur et la section de réception (8) présente des gorges longitudinales (10) s'étendant dans la zone du plan d'assemblage (FE) entre les éléments (3, 4) de plaque, dans laquelle les entretoises longitudinales (9) s'étendent dans les gorges longitudinales (10).

2. Plaque d'échangeur de chaleur selon la revendication 1, **caractérisée en ce que** les entretoises longitudinales (9) sont configurées dans la section transversale avec une forme triangulaire avec des parois (12) d'entretoise concave et une pointe arrondie (13).

3. Plaque d'échangeur de chaleur selon la revendication 1 ou la revendication 2, **caractérisée en ce que** les gorges longitudinales (10) sont configurées dans la section transversale avec une forme d'entonnoir avec des joues (14) de gorge concaves et une base (15) de gorge en forme de coin.

4. Plaque d'échangeur de chaleur selon l'une quelconque des revendications 1 à 3, **caractérisée en ce que** les entretoises longitudinales (9) et les gorges longitudinales (10) sont réalisées de manière complémentaire les unes par rapport aux autres.

5. Plaque d'échangeur de chaleur selon l'une quelconque des revendications 1 à 4, **caractérisée en ce que** la section de raccordement (7) présente deux sections (16, 17) de paroi incurvées de manière convexe, qui s'étendent entre les entretoises longitudinales (9).

6. Plaque d'échangeur de chaleur selon l'une quelconque des revendications 1 à 5, **caractérisée en ce que** la section de réception (8) présente des sections (18, 19) de paroi de réception s'étendant avec une incurvation convexe, auxquelles les joues (14) de gorge se raccordent.

7. Plaque d'échangeur de chaleur selon l'une quelconque des revendications 1 à 6, **caractérisée en ce que** la section de raccordement (7) présente des sections de paroi s'étendant de manière parallèle au plan d'assemblage (FE), qui passent respectivement côté extrémité par des sections de paroi s'étendant de manière incurvée dans les entretoises longitudinales.

8. Plaque d'échangeur de chaleur selon l'une quelconque des revendications 1 à 7, **caractérisée en ce que** la tubulure de raccordement (6) présente une butée, en particulier sous la forme d'un bourrelet annulaire (21), lequel repose côté frontal sur la section de réception (8).

9. Plaque d'échangeur de chaleur selon l'une quelconque des revendications 1 à 8, **caractérisée en ce qu'**est prévu entre la tubulure de raccordement (6), en particulier entre la section de raccordement (7) de la tubulure de raccordement (6), et la section de réception (8), un moyen d'arrêt de brasage (28).

10. Plaque d'échangeur de chaleur selon l'une quelconque des revendications 1 à 9, **caractérisée en ce que** la tubulure de raccordement (6) présente une section de couplage (24) avec un corps de butée, en particulier sous la forme d'un bourrelet annulaire (25).

11. Procédé de fabrication d'une plaque d'échangeur de chaleur avec une tubulure de raccordement (6), **caractérisé par** les étapes suivantes :
- la fourniture d'une tubulure de raccordement (6), qui présente une section de raccordement (7) avec deux entretoises longitudinales (9) dirigées vers l'extérieur ;
- la fourniture d'un premier élément (3) de plaque et d'un deuxième élément (4) de plaque, dans lequel le premier élément (3) de plaque et le deuxième élément (4) de plaque présentent un contour de réception pour la section de raccordement (7) ;
- le transfert du premier élément (3) de plaque et du deuxième élément (4) de plaque dans un outil de brasage de formage chauffé, lequel présente un outil inférieur et un outil supérieur, dans lequel la section de raccordement (7) de la tubulure de raccordement (6) est positionnée entre des sections de formage (27) des éléments (3, 4) de plaque et un matériau de brasage (20) est disposé entre la section de raccordement (7) et les éléments (3, 4) de plaque ;
- la fermeture de l'outil de brasage de formage et l'insertion par serrage de la pile de plaques entre l'outil inférieur et l'outil supérieur, dans lequel les contours de réception dans les sections de formage (27) des éléments (3, 4) sont formés de manière définitive autour de la section de raccordement (7) de la tubulure de raccordement (6) et une section de réception (8) est formée avec des gorges longitudinales (10) s'étendant dans la zone du plan d'assemblage (FE) entre les éléments (3, 4) de plaque ;
- le chauffage de la pile de plaque ;
- la mise sous pression interne d'un espace intermédiaire entre les éléments (3, 4) de plaque de la pile de plaques en introduisant un fluide actif par l'intermédiaire de la tubulure de raccordement (6) dans l'espace intermédiaire et la réalisation d'un canal dans au moins un élément (3, 4) de plaque ;
- la fusion du matériau de brasage (20) entre les éléments (3, 4) de plaque et entre la section de raccordement (7) et la section de réception (8) et l'assemblage par une technique de brasage ;
- l'ouverture de l'outil de brasage de moule et le retrait de la plaque de refroidissement (1) de l'outil de brasage de moule.

12. Procédé selon la revendication 11, **caractérisé en ce que** la plaque de refroidissement (1) est maintenue dans l'outil de brasage de moule après l'ouverture de l'outil de brasage de moule et avant le retrait et est refroidie.
